Europäisches Patentamt

European Patent Office

Office européen des brevets

(11) Publication number: **0 074 157**
**B1**

## EUROPEAN PATENT SPECIFICATION

(45) Date of publication of patent specification: **18.12.85**

(51) Int. Cl.⁴: **G 11 B 7/24,** G 11 C 13/04, C 03 C 21/00

(21) Application number: **82302144.9**

(22) Date of filing: **27.04.82**

(54) Optical data store.

(30) Priority: **08.09.81 US 300350**

(43) Date of publication of application:
**16.03.83 Bulletin 83/11**

(45) Publication of the grant of the patent:
**18.12.85 Bulletin 85/51**

(84) Designated Contracting States:
**DE FR GB NL**

(56) References cited:
**EP-A-0 047 121**
**AU-D-6 452 265**
**GB-A-2 044 980**

**LASER FOCUS, vol. 17, no. 8, August 1981,
Newton, Massachusetts, H. BRODY "Materials
for optical storage: A State-of-the-Art-Survey",
pages 47 to 52**

(73) Proprietor: **XEROX CORPORATION**
**Xerox Square - 020**
**Rochester New York 14644 (US)**

(72) Inventor: ·**Mcquaid, Paul E.**
**23349 Schoenborn Street**
**Canogo Park California 91304 (US)**

(74) Representative: **Weatherald, Keith Baynes et al**
**European Patent Attorney Rank Xerox Limited**
**Patent Department 338 Euston Road**
**London NW1 3BH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Optical data stores have been proposed to overcome the data density limitations of magnetic memories. Conventional "write once" optical memories record binary data by an ablation process wherein localized portions of a thin film of memory material are vaporized by a focused, high energy light beam to provide voids in the film at locations corresponding to one of the binary values. Because of vaporization debris and other factors, the signal-to-noise ratio of ablative optical memories is low. Also, the film must be protectively encased if archival storage is contemplated, since the film is too thin to be self-supporting and acceptable film materials, such as tellurium, are very friable and corrosive. Accordingly, there is need for an optical memory that can provide the features of high signal-to-noise ratio and archival storage without protective encasement, as well as low cost of manufacture.

AU—A-64 522/65 discloses glass articles having compressive stress in a surface layer; a first level of tensile stress in an interior zone, and a second level of tensile stress in a zone intermediate the surface and interior zone. Laser Focus, vol 17, No 2, Aug 81. pp 47—52, and GB—A—2 044 980 disclose data stores which use heat to release energy in a sub-surface layer to produce visually-differentiatable marks representing binary data.

According to the invention a layer of an ion-exchanged glass is utilized as an optical data store. Because of the ion exchange, such glass possesses stored energy in the form of compressive stress. When localized portions of the layer of ion-exchanged glass are heated sufficiently, those portions soften and release the compressive stress energy to produce localized, solid surface bumps. The presence or absence of surface bumps provides binary data storage. Since the surface bumps scatter light differently from flat portions of the glass surface, and since the glass is self-supporting and rugged, the ion-exchanged glass memory can provide the features of high signal-to-noise ratio and archival storage. An ion-exchanged glass memory is inherently a low cost memory because of its use of a readily available, low cost material; i.e., glass, as the storage medium.

The present invention will now be described by way of example with reference to the accompanying drawings, in which:

Figure 1 is a perspective view of an optical memory in accordance with the invention;

Figure 2 is a graph showing depth of ion exchange layer as a function of time;

Figure 3 shows the absorption spectra of ion-exchanged layers, and

Figure 4 is a block diagram of a system for recording data on, and reading data from, the optical memory of the invention.

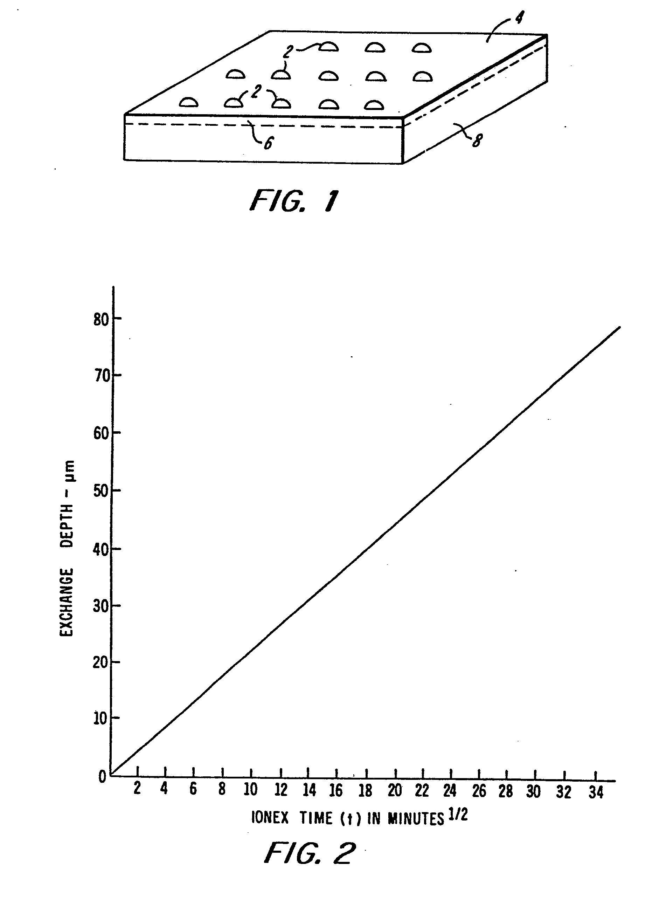

Referring to Figure 1, binary data are stored in the form of small discrete, solid bumps 2 on the surface 4 of the ion-exchanged surface layer portion 6 of a borosilicate glass containing an appropriate oxide modifier such as, for example, Corning Glass 7740 which is a borosilicate glass containing 4 mole per cent sodium oxide ($Na_2O$) as an oxide modifier. The ions of the oxide modifier of an acceptable glass are dispersed in a loose bonding arrangement within the glass lattice whereby the ions of the oxide modifier, sodium ions ($Na^+$) in the glass specified, are very mobile within the glass lattice. Since the oxide modifier is added while the glass is molten, during its manufacture, the glass substrate 8 contains very little stored energy in the form of stress.

A relatively large quantity of energy, in the form of compressive stress, is stored within the surface layer portion 6 via an ion exchange. Such an ion exchange is accomplished by exposing the substrate 8 to exchange ions that have a greater affinity for occupying lattice sites of the glass than do the ions of the modifier oxide. In a specific embodiment, copper ions ($Cu^+$) are made to exchange lattice sites with the sodium ions ($Na^+$) of the referenced borosilicate glass 7740, that is, sodium ions are made to out-diffuse or vacate lattice sites of the glass and those vacated lattice sites are occupied by copper ions. Because of the copper ions having an atomic radius 0.098 nm which is slightly larger than the atomic radius of the sodium ions 0.096 nm the ion-exchanged layer portion 6 contains stored energy in the form of compressive stress.

The specified ion exchange is accomplished by immersing the 7740 glass in a molten bath of cuprous chloride for a period. Although the temperature of the bath is not critical, 550°C being satisfactory, care must be taken not to vaporize the cuprous chloride, since such vapors are toxic. The depth of the ion-exchanged layer portion 6 is a square root function of the exchange time, that is, the time that the 7740 glass is in the bath. Specifically, $d=2.094 \sqrt{t}$ where d=depth of layer 6 in microns and t=time in molten bath in minutes. Figure 2 is a graph showing the depth in microns of the layer portion 6 as a function of exchange time in minutes for a 550°C bath. In Figure 1, an ion-exchanged layer 6 is on only one side of the substrate because of appropriate masking during the bath or lapping thereafter, but an ion-exchanged layer can be provided along both planar surfaces if it is desired to have a dual-sided memory.

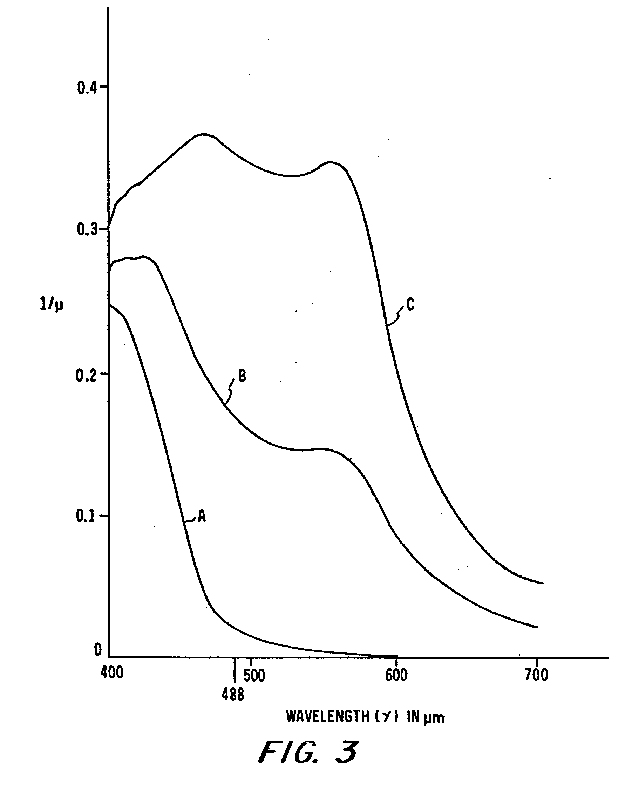

In addition to storing energy in the form of compressive stress within layer portion 6, the ion exchange can also change the optical absorption spectra of layer portion 6. When CuCl and 7740 glass provide the ion-exchanged layer 6, layer 6 is colored (darkened) and its optical absorptivity is increased. Curve A of Figure 3 is a plot of the absorption spectra of a layer of copper ion exchanged 7740 glass. Note that the ion-exchanged layer has relatively good absorptivity at the blue end of the spectrum, the wavelength of the emission from conventional argon and helium-cadmium laser making such lasers acceptable sources of write beam energy for the ion-exchanged glass memory disclosed. The increased optical absorptivity (as compared to the glass prior to ion exchange) permits a significant amount of write beam energy to be absorbed at discrete localized portions of the ion-exchanged layer 6, with the heat resulting from that absorption softening, or making pliant, the ion-exchanged layer at those discrete localized portions. The stored compressive stress energy "pushes" on the pliant heated portions, causing such portions to deform in the only direction available whereby small discrete surface protrusions or bumps 2 are formed.

As noted, the 7740 glass contains 4 mole percent $Na_2O$. Borosilicate glasses containing an oxide modifier of higher content could be used and would provide additional advantages. First, such glass would have a lower softening temperature, and thus require less write beam energy for glass softening and resultant release of compressive stress energy. Secondly, such glasses would provide more lattice sites for the exchange ions to occupy, thus increasing the absorptivity of such glass and further decreasing write beam energy requirements.

The glass substrate can contain an oxide modifier other than sodium oxide. For example, the glass substrate could contain either potassium oxide or lithium oxide as an oxide modifier instead of sodium oxide, or a combination of two or more of the oxides. $Cu^+/K^+$ and $Cu^+/Li^+$ ion exchanges would be achieved in substantially the same manner that a $Cu^+/Na^+$ ion exchange is achieved, however, a $Cu^+/Na^+$ ion exchange is preferred because $Na^+$ ions out-diffuse much better than either $K^+$ ions or $Li^+$ ions.

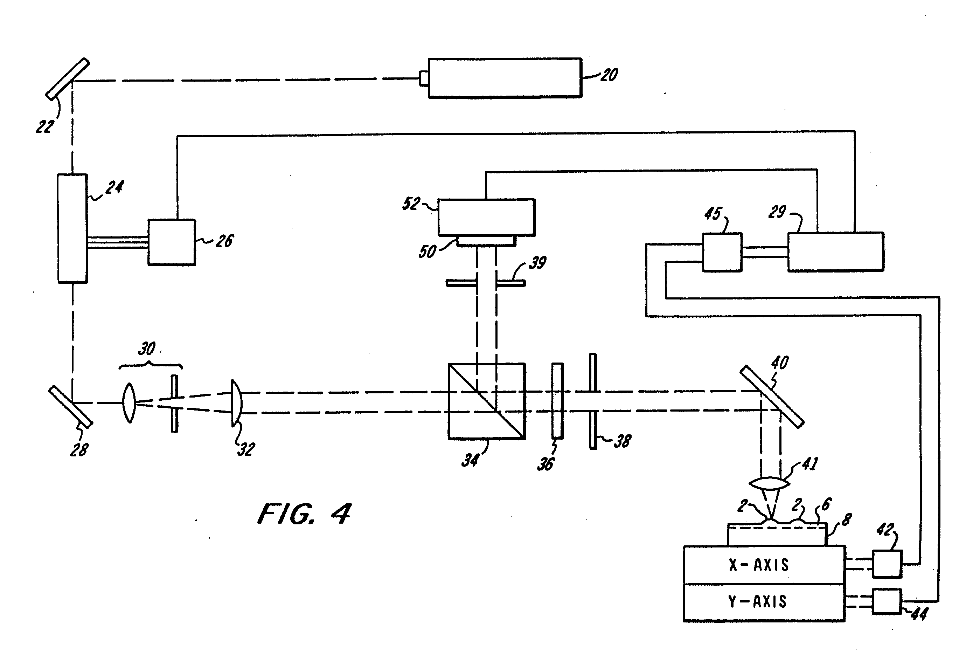

Figure 4 depicts an exemplary system for recording and reading of the bumps 2. An argon laser 20, such as Lexel Model 95-4, emits a coherent 488 nanometer light beam. The emitted light beam (the write beam) is directed by a mirror 22 onto a conventional electro-optic modulator 24 with associated power supply 26, such as sold by Coherent Associates, which function to modulate the amplitude of the write beam in accordance with data signals received in a conventional manner from a control processor 29, such as a 48K Apple II computer. Mirror 28 directs the modulated write beam onto a spatial filter 30 which "cleans up" the write beam before it reaches a collimating lens 32 which recollimates and expands the beam (spatial filter 30 having uncollimated the write beam). Polarizing beam splitter 34 polarizes and transmits the write beam, and quarter wavelength retarder plate 36 rotates the plane of the polarized beam to facilitate separation of the write and read beams as explained hereinafter. The diameter of the polarized write beam is regulated by the controlled aperture member 38, with the properly diametered write beam being directed by mirror 40 onto a lens 41 which focuses the write beam onto a discrete portion of the surface 4 of ion-exchanged layer 6. Surface 4 of layer 6 is moved relative to the write beam along 'x' and 'y' coordinate axes by stepper motors 42 and 44 which are controlled in a conventional manner by stepping motor controls receiving appropriate inputs from the control processor 29. Accordingly, the write beam successively heats selected portions of the ion-exchanged layer 6, resulting in the localized release of stored compressive stress energy and the formation of solid data bumps 2.

Reading is accomplished by having laser 20, or another laser, emit a second beam (the read beam), of lesser intensity than the write beam, along the path of the write beam. Light reflected from the surface of the ion-exchanged layer 6 is redirected by mirror 40 to the quarter wavelength retarder plate 36 which rotates the read beam an additional quarter wavelength so that it is now reflected (not transmitted) by the polarizing beam splitter 34. Photodetector 50 reads the intensity of the read beam reflected from the surface of ion exchange layer 6, the read beam being processed through a variable aperture 39 positioned forward of the photodetector 50 in order to shield the detector from stray light. Photodetector 50 with associated amplifier 52 reads the degree of reflectivity of each discrete portion of the ion-exchanged layer 6 on which the read beam falls.

When the read beam is incident upon a bump 2, the read beam is scattered by the bump and light of low intensity reaches the photodetector 50. Flat portions of the surface of the ion-exchanged layer 6 do not scatter the read beam and, accordingly, light of relatively high intensity reaches the photodetector 50. Thus, the binary value of the information on the bumped surface of the ion-exchanged layer 6 is detected in binary by the photodetector 50. The amplified output of photodetector 50 is coupled to the control processor 29 to coordinate in a conventional manner the coordinates of each portion of the ion-exchanged layer illuminated by the write beam with the intensity of the signal received from photodetector 50 for those coordinates.

The size of bumps 2 is dependent upon several factors including the compressive stress energy of layer 6, the optical absorptivity of layer 6, and the power and pulse length of the write beam. Using copper ion exchanged 7740 glass produced by immersing 7740 glass in a molten (550°C) copper chloride bath for 1320 minutes and an argon laser (emission at 488 nm) operated to deliver one (1) microsecond pulses of 30 milliwatts at the surface of layer 6, bumps 2 are formed with a diameter of about 2.25 microns and a height of about 0.3—0.5 microns. Bumps of such size are formed when the lens 41 is a conventional 10 power microscope objective. Smaller diameter bumps, on the order of 0.5 microns, are formed when the lens 41 is of higher power, 60× being typical. The relatively large height of the bumps 2 provides effective read beam scattering and a resultant high signal-to-noise ratio compared to that of optical memories using ablated tellurium. Also, since the data are stored as a part (solid surface bumps) of an extremely rugged material (glass), archival storage is readily achieved without need for protective encasement. Additionally, since the memory medium is an extremely inexpensive material, a very low cost optical memory is provided.

Although superior to ablated tellurium as an optical memory in several aspects, the ion-exchanged optical memory disclosed requires more energy for data storage than does a memory utilizing ablated tellurium. For example, it typically requires on the order of 0.25 nanojoules of energy to ablate tellurium and 30 nanojoules of energy to form bumps 2. The data storage energy requirements of a copper ion exchanged optical memory layer can be reduced by hydrogen reduction wherein a hydrogencontaining gas, such as forming gas (80% nitrogen, 20% hydrogen) is caused to flow over a heated (400°C) ion-exchanged optical memory layer for a period (from one to several hours) directly proportional to the thickness of the ion-exchanged optical memory layer. The hydrogen flow causes the copper ions to become minute particles of metallic copper (Cu°). The presence of metallic copper in the ion-exchanged layer increases the absorptivity of the ion-exchanged layer, as shown by curves B and C of Figure 3 for hydrogen reduction times of one and six hours, respectively. The increased absorptivity of the ion-exchanged layer reduces the amount of write beam energy needed to soften discrete portions of the ion-exchanged layer to the point where the compressive stress energy of those discrete portions is released as bumps 2. As an example, when a sample of 7740 glass has been CuCl ion-exchanged for 15 minutes at 550°C and then subsequently reduced in forming gas for 45 minutes at 400°C, bumps can be formed with write beam energies of less than one (1) nanojoule. This occurs when lens 41 is a 60X, .85N.A. objective.

Although an ion exchange between copper ions and ions of sodium, potassium or lithium will provide an effective optical memory material, the use of copper as a source of exchange ions causes the memory material to have some inherent limitations. Specifically, the wavelength of the laser beam used for recording data on a $Cu^+/Na^+$ exchange material is restricted to the blue end of the spectrum since, as indicated by curve A of Figure 3, a $Cu^+/Na^+$ exchange material has very low optical absorptivity at wavelengths substantially greater than 488 nanometers. Also, since $Cu^+$ ions are not much larger than $Na^+$ ions, the absolute amount of stored compressive stress energy is relatively low. Increased optical absorptivity at wavelengths in excess of 488 nanometers can be achieved by utilizing glass color filters, such as Schott BG-38 and BG-18, as the glass substrate 8. Significant optical absorptivity in the far red end of the spectrum (800—950 nanometers) would allow the use of diode lasers as the write beam source. Increased stored compressive stress energy can be achieved by utilizing exchange ions that have a much larger atomic radius than do the oxide modifier ions. For example, utilizing potassium ions as the exchange ions with a glass containing sodium oxide as the oxide modifier will provide a relatively large amount of compressive stress energy since potassium ions are much larger than sodium ions. In a manner similar to a $Cu^+/Na^+$ ion exchange, a $K^+/Na^+$ ion exchange would be achieved by immersing a sodium oxide modified glass in a molten bath of a potassium salt, such as KCl.

## Claims

1. A data store in the form of a substrate of an ion-exchanged glass having a surface layer deformed or not at selected locations to store binary data, the deformations having been produced by localised heating to release at least some of the compressive stress produced in the glass by a preceding ion-exchange process.

2. A method of storing data comprising:
   providing a layer of ion-exchanged glass storing energy in the form of compressive stress, and
   releasing the stored energy from discrete selected portions of the layer, the release resulting in discrete, solid bumps in the surface of the layer at locations corresponding to the discrete selected portions.

3. A method of storing data as claimed in claim 2, in which the stored energy is selectively released by heating incremental portions of the surface layer.

4. A method as claimed in claim 2 or 3, in which the threshold for the release of stored energy is lowered by subjecting the ion-exchanged surface layer to the action of a reducing gas, whereby a significant number of exchanged ions become converted to their metallic form, prior to the energy-releasing step.

## Revendications

1. Mémoire de données sous forme d'un substrat en verre d'échange d'ions comportant une couche en surface déformée ou non à des emplacements sélectionnés de manière à stocker des données binaires, les déformations ayant été produites par chauffage localisé afin de libérer au moins une partie de la tension de compression produite dans le verre par un processus antérieur d'échange d'ions.

2. Procédé de stockage de données, comprenant:
   la fourniture d'une couche d'énergie de stockage dans du verre à échange d'ions sous forme de tension de compression; et
   la libération de l'énergie stockée à partir de parties finies sélectionnées de la couche, la libération se traduisant par des bossages solides, finis, dans la surface de la couche à des emplacements correspondants aux parties finies sélectionnées.

3. Procédé de stockage de données selon la revendication 2, dans lequel l'énergie stockée est libérée sélectivement par le chauffage de parties incrémentielles de la couche de surface.

4. Procédé selon la revendication 2 ou la revendication 3, dans lequel le seuil pour la libération de l'énergie stockée est abaissé en soumettant la couche en surface d'échange d'ions à l'action d'un gaz de réduction, d'où il résulte qu'un nombre important d'ions échangés prennent leur forme métallique, avant l'étape de libération d'énergie.

## Patentansprüche

1. Datenspeicher in der Form eines Trägermaterials, bestehend aus Glas mit ausgetauschten Ionen, welches eine Oberflächenschicht aufweist, die an ausgewählten Stellen entweder verformt ist oder nicht, um binäre Daten zu speichern und wobei die Verformungen durch örtliches Erwärmen erzeugt werden, welches durchgeführt wird, um zumindest einen Teil der Druckspannungen, die in dem Glas durch einen vorasugehenden Ionaustauschprozess entstanden sind, abzubauen.

2. Verfahren zum Speichern von Daten, bei dem eine Schicht aus ionenausgetauschtem Glas bereitgestellt wird, welches Energie in der Form von Druckspannung speichert und bei dem die gespeicherte Energie an bestimmten, ausgewählten Stellen der Schicht abgegeben werden, wobei diese Abgage zu diskreten, festen Erhebungen in der Oberfläche der Schicht an Stellen Führt, die den bestimmten ausgewählten Stellen entsprechen.

3. Verfahren zum Speichern von Daten nach Anspruch 2, bei dem die gespeicherte Energie gezielt durch Erwärmung differentieller Abschnitte der Oberflächenschicht freigesetzt wird.

4. Verfahren nach Anspruch 2 oder 3, wobei der Schwellwert für das Freisetzen gespeicherter Energie dadurch herabgesetzt wird, daß man die ionenausgetauschte Oberflächenschicht einem reduzierenden Gas aussetzt, wodurch eine bedeutende Anzahl ausgetauschter Ionen vor der Energiefreisetzung in ihre metallische Form umgewandelt werden.

FIG. 1

FIG. 2

0 074 157

FIG. 3

WAVELENGTH (γ) IN μm

2

FIG. 4